Europäisches Patentamt

(19) European Patent Office

Office européen des brevets

(11) Publication number: **0 012 619**
**B1**

(12) # EUROPEAN PATENT SPECIFICATION

(45) Date of publication of patent specification: **24.08.83**

(51) Int. Cl.³: **G 05 B 19/39, B 23 Q 15/00**

(21) Application number: **79302911.7**

(22) Date of filing: **14.12.79**

(54) Machine tool drive motor control system.

(30) Priority: **16.12.78 JP 156760/78**

(43) Date of publication of application:
**25.06.80 Bulletin 80/13**

(45) Publication of the grant of the patent:
**24.08.83 Bulletin 83/34**

(84) Designated Contracting States:
**DE FR GB**

(56) References cited:
**DE - A - 2 810 772**
**DE - B - 1 954 636**
**DE - B - 2 348 026**
**DE - C - 1 069 259**
**FR - A - 2 213 713**
**FR - A - 2 388 640**
**GB - A - 1 329 968**
**US - A - 3 564 368**
**US - A - 3 704 510**

(73) Proprietor: **Fanuc Ltd**
**5-1, Asahigaoka, 3-chome**
**Hino-shi, Tokyo 191 (JP)**

(72) Inventor: **Kohzai, Yoshinori**
**16-3, Hirayama, 2-Chome**
**Hino-shi Tokyo 191 (JP)**
Inventor: **Fujioka, Yoshiki**
**3-27, Tamadaira**
**Hino-shi Tokyo 191 (JP)**
Inventor: **Ota, Naoto**
**Dai-ichi Sakae-so 38-9, Toyoda, 3-chome**
**Hino-shi Tokyo 191 (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Machine tool drive motor control system

This invention relates to a machine tool drive motor control system, for control of a spindle drive motor of a machine tool automatically controlled by a numeric control unit.

There are many cases in which the interior of a workpiece is machined by a boring tool which is inserted into a hole that has been provided in the workpiece in a previous step. When performing a boring operation of this type, it is an essential condition that the rotor shaft of a spindle motor which drives a spindle having a spindle head carrying the boring tool be stopped firmly, positively, at a prescribed angular position when the boring tool is first inserted into the narrow insertion hole and when the tool is withdrawn from the hole after the completion of boring. If this condition is not met the boring tool may contact the side of the insertion hole and thus damage the workpiece. It is therefore conventional practice to detect a position at which the spindle should stop by detection means such as a photoelectric detector or a limit switch mechanism, and then apply a mechanical brake to the spindle to stop it at the prescribed position in response to detection signals issued by the detection means. However, since the conventional apparatus of the type described employs a mechanical brake, prolonged use results in brake shoe wear which eventually makes it impossible to stop the spindle at the prescribed position, thus allowing the possibility of the blade of the boring tool contacting the wall of the insertion hole. In other words, the conventional apparatus can have a disadvantage in that high precision positioning cannot be maintained over an extended period of time.

Moreover, a numerically controlled machine tool may make use of a paper tape on which instructions relating to the positioning of a tool with respect to a workpiece are provided in the form of numerical command values, and will be arranged to control the position of a table on which the workpiece is secured or the position of the tool itself in such a manner that the tool will always be correctly positioned with respect to the workpiece. In controlling the machine tool in this fashion, a certain reference point on the workpiece is chosen as an origin or "home" position, and the workpiece is then secured to the table in an accurate manner. Thereafter, the blade edge of the cutting tool mounted on a spindle of the machine tool is aligned with the origin position on the workpiece, and with the edge at that position a counter in the numerical control unit is reset to zero, and then information on the numerical control tape (NC tape) is read into a memory to preset numerical command values. A START button is then depressed to effect the positioning operation, and machining begins when the positioning has been completed.

The reference point mentioned above is set at the centre of a small, round hole formed in the workpiece. Accordingly, when aligning the tip of the cutting tool blade mounted on the spindle with the origin position (reference point), the tip of the cutting tool blade is first temporarily set within the small circular hole in the workpiece, the spindle or the workpiece is then moved in an X- direction until the blade edge contacts the periphery of the hole, and the amount of movement is stored in the memory as a value $X_1$. The tip of the cutting tool is then returned to the temporarily set position within (nominally at the centre of) the hole. Once this has been accomplished the spindle is rotated by 90 degrees to orient the cutting blade in the Y-direction, and the spindle or workpiece is then moved in the Y-direction until the cutting blade contacts the periphery of the round hole. The amount of movement is stored in the memory as a value $Y_1$ and the blade returned again to the temporarily set position. Such operations are repeated in the −X and −Y directions also, to compute respective distances in each of four directions from the temporarily set position to the periphery of the hole. The reference point is then finally set by calculating the arithmetic mean of the four distances obtained as described above, with respect to the X- and Y-directions.

For the above operations to succeed, it is necessary for the 90-degree rotations of the spindle to be performed with accuracy, and that the spindle be stopped firmly at the assigned positions after the rotations. However, conventional apparatus employs photoelectric detectors or limit switches as described above and stops the spindle by applying a mechanical brake, so that the foregoing problem relating to the maintenance of high precision can once more occur.

US—A—3 704 510 discloses a tool change mechanism for a machine tool. In the mechanism the rate of rotation of a tool spindle is normally under control of a tape reader via an error operator and a servo amplifier which drives the tool spindle to rotate. The error operator receives velocity control information from the tape reader and the output of a tachometer driven by the tool spindle. An output of the error operator controls the servo amplifier. When the tool spindle is to be rotated to a required angular position, relays are switched so that the servo amplifier receives an output of a discriminator panel in place of the output of the error operator. The output of the discriminator panel is based upon an error signal from a positioning synchro which receives a fixed command reference voltage, which specifies the required angular position, and a rotor of which is driven whenever the tool spindle is rotated under power.

GB—A—1 329 968 discloses a converter for providing a digital representation of an input angular displacement. A rotatable input shaft of the converter is coupled to the rotor of a synchro resolver. The rotor carries a winding which is energised with alternating current supplied from an alternating-current supply-source via a low-pass filter and a drive amplifier. The stator-winding arrangement of the resolver consists of two interconnected windings arranged at right angles to one another on the stator. Alternating current signals having amplitudes dependent upon the sine and cosine of the angular displacement are induced in the two stator windings. The signals from the stator windings are applied to a selector and logic unit which selects one of those signals and supplies it to a phase sensitive demodulator. The demodulator compares the phase of the selected signal with that of the energising signal delivered to the rotor winding and provides a direct current signal that has a magnitude and sense dependent upon the amplitude and phase of the selected signal. A first comparator compares the direct current signal with the energising signal and provides an output pulse whenever the direct current signal and the energising signal are equal during each cycle of the energising signal. A bistable circuit is arranged to be reset by such output pulses. A second comparator receives the energising signal, advanced in phase by 1/8th of a cycle, and provides output pulses whenever the phase advanced energising signal increases in a positive direction through a zero amplitude level. The bistable is arranged to be set by such output pulses. The output of the bistable operates a gate which receives a pulse train provided by frequency multiplication (by $2^{10}$) and squaring of the energising signal. Between each setting of the bistable circuit by an output pulse of the second comparator and subsequent resetting by an output pulse of the first comparator, the gate passes a number of pulses dependent upon the DC output level supplied by the phase sensitive demodulator, which is in turn dependent upon the rotational position of the shaft. A count of pulses is provided in a binary counter. The stator winding signal for delivery to the phase sensitive demodulator is selected in dependence upon the quadrant in which the shaft is positioned. If the stator winding signal is properly selected, the count in the counter corresponds to the sine of an angle in the range ±45°. If the counter is outside this range the other stator winding signal is selected for delivery to the phase sensitive demodulator. The quadrant to which the count in the counter relates is indicated by a signal indicating the stator winding signal presently selected, and by a signal representing the phase of the not-selected stator winding signal.

FR—A—2 388 640 discloses control apparatus for the spindle of a machine tool. The apparatus provides for speed control and orientation control. The apparatus uses an optical pulse coder for sensing rotation of the spindle motor. The pulse coder produces a pulse for each rotation of the spindle motor through a predetermined small angle. For speed control an analog command speed signal is delivered to a comparator. The comparator compares the analog command speed signal with an analog signal, derived from pulses of the pulse coder, proportional to the speed of the spindle motor. The speed of the spindle motor is controlled on the basis of an output of the comparator to make that speed equal to the command speed. For position control, a position controcircuit delivers a signal proportional to the difference between an actual orientation and a desired orientation, which signal is delivered to the comparator in place of the analog command speed signal.

According to the present invention there is provided a machine tool drive motor control system, for controlling a spindle drive motor arranged for driving a spindle of a machine tool including:—

speed detecting means for providing a speed signal indicative of the actual speed of rotation of the spindle;

orientation control means for providing a position signal indicative of the difference between actual orientation of the spindle and a desired orientation, termed a lattice point, at which the spindle is to be brought to rest;

switching means having respective inputs connected to receive a speed command signal, indicative of a desired speed of rotation of the spindle, and the position signal, and selectively operable to deliver one or other of those signals from an output thereof; and

a speed control unit having a first input connected to the output of the switching means, a second input connected to receive the speed signal, and an output connected to the spindle drive motor for control thereof;

characterised in that the orientation control means include;

a clock generator for generating clock signals;

a timing circuit arranged to receive the clock signals and responsive thereto to provide timing signals;

an excitation signal generator arranged to receive the clock signals via the timing circuit and to provide an excitation signal;

a resolver, operationally connected to the spindle, having a secondary winding arranged to receive the excitation signal, and two primary windings arranged respectively to produce sine and cosine signals indicative of the actual orientation of the spindle;

a synchronous rectifier circuit arranged to receive a signal derived from the resolver and a timing signal generated by the timing circuit, for providing a synchronously rectified signal;

a quadrant discriminator circuit arranged to receive another signal derived from the resolver and a signal generated by the timing circuit, for providing quadrant discrimination signals for use in identifying the quadrant in which the lattice point lies; and

a wave synthesising circuit arranged to receive the synchronously rectified signal and the quadrant discrimination signals and operable to provide the said position signal;

said orientation control means further including;

a lattice point selection circuit, arranged to receive the sine and cosine signals from the resolver, having first and second output ports connected respectively to the synchronous rectifier circuit' and the quadrant discriminator circuit, and having switching circuit means operable to select one of four pairs of signals for delivery to the synchronous rectifier circuit and the quadrant discriminator circuit, the signals of the selected pair being delivered from the first and second output ports respectively, and the signals of each pair comprising two signals selected from the group constituted by the sine signal, the cosine signal, a sine signal inverted in phase with respect to the sine signal, termed the -sine signal, and a cosine signal inverted in phase with respect to the cosine signal, termed the-cosine signal, the four pairs being:— the sine signal and the cosine signal; the -cosine signal and the sine signal; the -sine signal and the -cosine signal; and the cosine signal and the -sine signal;

whereby, in dependence upon the pair of signals selected, any one of four lattice points, mutually spaced by 90°, can be selected as the desired position.

An embodiment of the present invention can provide machine tool drive motor control which is capable of firmly stopping a controlled motor selectively at stopping positions mutually displaced at rotational angles of 90 degrees, through the use of a speed control loop which normally serves for reducing the difference between a speed command signal and a speed feedback signal to zero, without resorting to the use of a mechanical brake.

An embodiment of this invention can provide a control system for a machine tool drive motor, which control system comprises a motor for driving a machine tool, which motor is controlled by a speed control loop for limiting to zero the difference between a speed command signal and a speed feedback signal; a resolver having a secondary winding which receives an excitation signal and two primary windings which generate sine and cosine signals in response thereto, the operation of the resolver being linked to the rotation of the motor; and an orientation control circuit which uses the sine and cosine signals from the resolver for synthesizing a monotonically increasing function of an angular deviation, which function is symmetrical with respect to the points of a lattice at which the deviation becomes zero; wherein, when the motor is to be stopped at a prescribed position, the orientation control circuit delivers an output signal as a position feedback signal to the input side of the control loop to stop said motor rigidly at the preselected angular position over the 360-degree range of rotation thereof.

The orientation control circuit which uses the sine and cosine signals from the resolver may synthesize a monotonically increasing function of an angular deviation which is symmetrical with respect to the points of a lattice at which the deviation becomes zero, and which switches between the sine and cosine signals to create and select lattice points at which the deviation becomes zero for every 90-degree rotation of said resolver, thereby when said motor is to be stopped at a prescribed position, the orientation control circuit delivers an output signal as a position feedback signal to the input side of the control loop to stop said motor rigidly at any one of four angular stopping positions (lattice points) arrayed at a pitch of 90 degrees.

Reference will now be made, by way of example, to the accompanying drawings, in which:—

Fig. 1 is a schematic block diagram illustrating a machine tool drive motor control system for assistance in understanding the present invention;

Figs. 2 and 3 are schematic diagrams for assistance in explanation of spindle stopping operations;

Fig. 4 is a schematic block diagram illustrating on orientation control circuit, for assistance in understanding the present invention;

Fig. 5 shows respective waveform diagrams (A) to (J), illustrating waveforms associated with the circuit of Fig. 4;

Fig. 6 is a circuit diagram of a wave-synthesizing circuit for use in the circuit of Figure 4;

Fig. 7 shows respective waveform diagrams, (A) to (C), illustrating timing relationships between the output of the orientation control circuit of Figure 4, the speed of a DC motor, and an orientation command signal;

Fig. 8 is a schematic block diagram illustrating an orientation control circuit as employed in an embodiment of this invention;

Fig. 9 is a circuit diagram of a lattice point selection circuit as employed in an embodiment of this invention; and

Fig. 10 shows respective diagrams, (A) to (D), useful in explaining stopping position orientations.

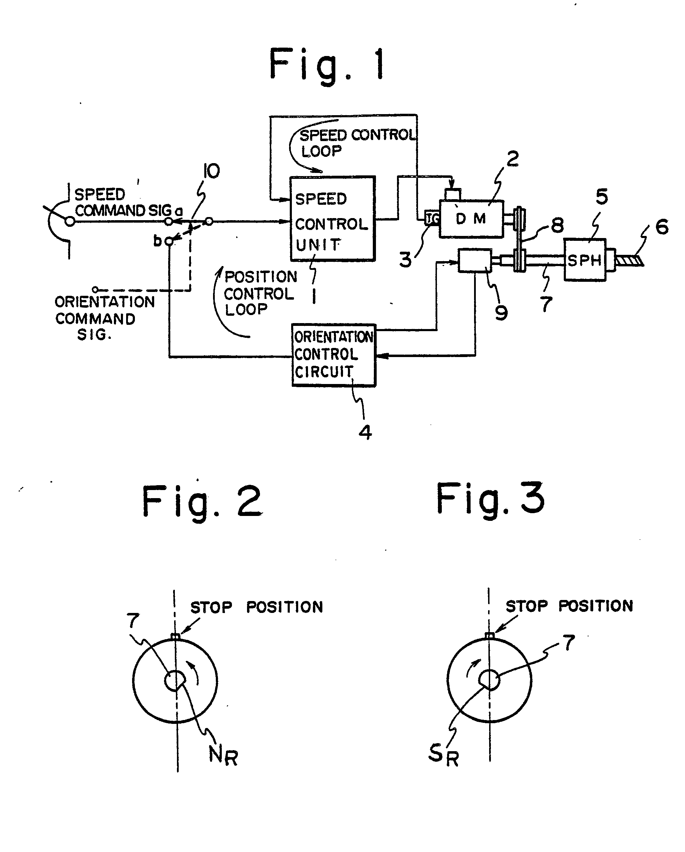

In Figure 1 there are shown a speed control unit 1, a DC motor (DM) 2, a tachogenerator (TG) 3 for detecting the speed of the DC motor 2, and an orientation control circuit 4. The construction of these components will be described hereinafter. There are further shown a spindle head (SPH) 5 for mounting a tool 6, the spindle head having a spindle shaft 7 connected to the motor 2 via a belt 8, a resolver 9 which is connected directly to the spindle shaft 7, and a change-over switch 10.

When machining a workpiece with the tool 6, a movable contact of the change-over switch 10 is switched over to a stationary contact *a* thereof to allow a speed command voltage to be applied to the speed control unit 1. The speed control unit operates to cause the DC motor 2 to rotate and the tachogenerator 3 responds by delivering an output signal which is fed back to the input side of the control unit. This forms a speed control loop through the operation of which the DC motor 2 is caused to rotate at a speed determined by the speed command voltage.

When the DC motor 2 is to be stopped following completion of machining, the speed command voltage is removed and the motor is brought to a stop by electrical braking, but an orientation command signal is impressed upon the change-over switch 10 immediately before the motor stops so that the movable contact is switched over to a stationary contact *b* thereof.

This switching over of switch 10 forms a position control loop in which the output of resolver 9 serves as a position detection signal.

Thus, when the orientation command signal is delivered, the spindle shaft 7 will rotate in the counter-clockwise direction, if the reference point $N_R$ of spindle shaft 7 is positioned as shown in Fig. 2, to bring the reference point $N_R$ to a stop position as indicated, at which time the orientation control circuit 4 issues a ZERO signal that stops the spindle shaft 7 at this position. The position control loop functions to firmly retain the spindle shaft at this position. On the other hand, if a reference point $S_R$ is positioned as shown in Fig. 3, the spindle shaft 7 will rotate in the clockwise direction to bring the reference point $S_R$ to the stop position. The operation then proceeds in the same manner as described above, with the position control loop functioning to retain the spindle shaft at the prescribed stopping position.

Embodiments of the present invention provide four stopping positions at a 90-degree pitch (i.e. at positions angularly displaced by 90°), and the spindle shaft 7 can be stopped selectively at any one of these positions at the time of an orientation command. This will be described below in more detail.

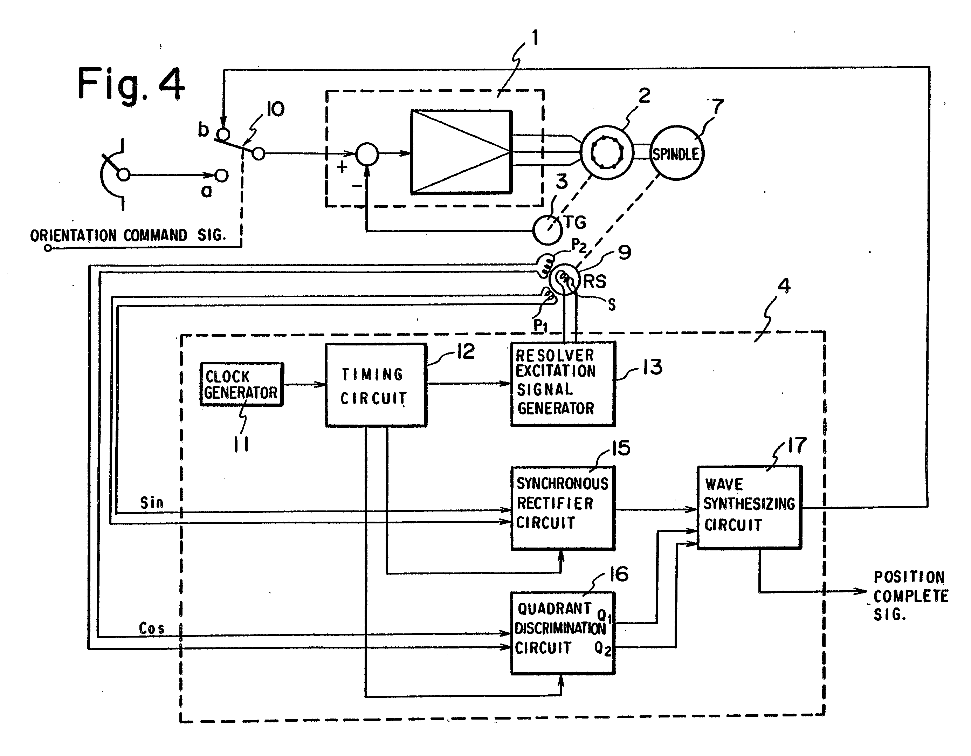

Fig. 4 is a block diagram showing a detailed construction of an orientation control circuit 4 for assistance in understanding the present invention. The circuit comprises a clock generator 11, timing circuit 12, resolver excitation signal generator 13, synchronous rectifier circuit 15, a quadrant discrimination circuit 16, and a wave synthesizing circuit 17.

The operation of the system shown in Figure 1 will now be described with particular emphasis on its function when it is provided with orientation control circuit 4 as shown in Figure 4.

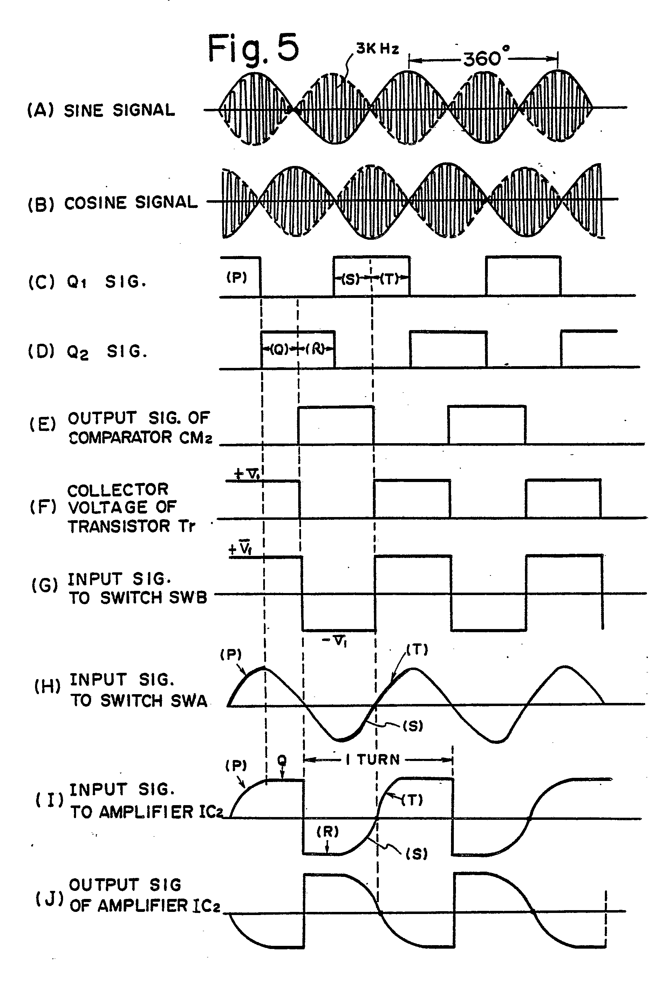

The clock generator 11 produces a clock signal having a rectangular waveform and an oscillation frequency of normally 3 kHz. The resolver excitation signal generator 13 receives the clock signal via the timing circuit 12 and produces a resolver excitation signal, comprising a 3 kHz sine wave, which is applied to a secondary winding S (rotor winding) of the resolver 9. Impressing the 3 KHz sine wave upon the secondary winding S causes a primary winding $P_1$ of the resolver to produce a 3 KHz "sine" signal whose peak value varies in proportion to the sine of the angular position of the rotor shaft of resolver 9, and causes a primary winding $P_2$ of the resolver to similarly produce a 3 KHz "cosine" signal whose peak value varies in proportion to the cosine of the angular position of the resolver rotor shaft, the sine and cosine signals having the same phase. The sine and cosine signals produced by the primary windings $P_1$, $P_2$ are respectively illustrated in waveforms (A) and (B) in Fig. 5. The orientation control circuit 4 produces a STOP signal of zero potential when a rotational position signal in the shape of a sine wave, designated by the solid line in waveform (A) of Figure 5, is at a zero potential level, and a quadrant discrimination signal in the shape of a cosine wave, designated by the solid line in waveform (B) of Figure 5 is at its maximum positive value, the rotational position signal being obtained by the synchronous rectification (detection) of the sine signal from the primary winding $P_1$, and the quadrant discrimination signal by the synchronous rectification (detection) of the cosine signal from the primary winding $P_2$. The operation of orientation control circuit 4 up until the zero-potential STOP signal is delivered from its wave synthesizing circuit 17 will now be described.

The sine signal produced by primary winding $P_1$ and shown in waveform (A) of Figure 5 is applied to synchronous rectification circuit 15 which synchronously rectifies the sine signal by means of the 3 KHz clock signal from timing circuit 12 so as to provide the rotational position signal (the thick, solid-line in waveform (A)) that varies in the manner of a sine wave in accordance with the rotation of spindle shaft 7, the rotational position signal being delivered to wave synthesizing circuit 17. The cosine signal produced by primary winding $P_2$ is applied to quadrant discrimination circuit 16 and is similarly synchronously rectified (detected) within the circuit 16 to provide the quadrant discrimination signal which varies in the manner of a cosine wave, as shown by the thick, solid line in waveform (B), in accordance with the rotation of the spindle shaft 7. The quadrant discrimination circuit 16, on the basis of the quadrant discrimination signal which it has produced, then produces a rectangular wave as shown in waveform (C) of Figure 5, as well as a rectangular wave delayed in phase by 180 degrees with respect thereto as shown in waveform (D) of Figure 5, both of these rectangular quadrant discrimination signals being delivered to wave synthesizing circuit 17 as switching signals.

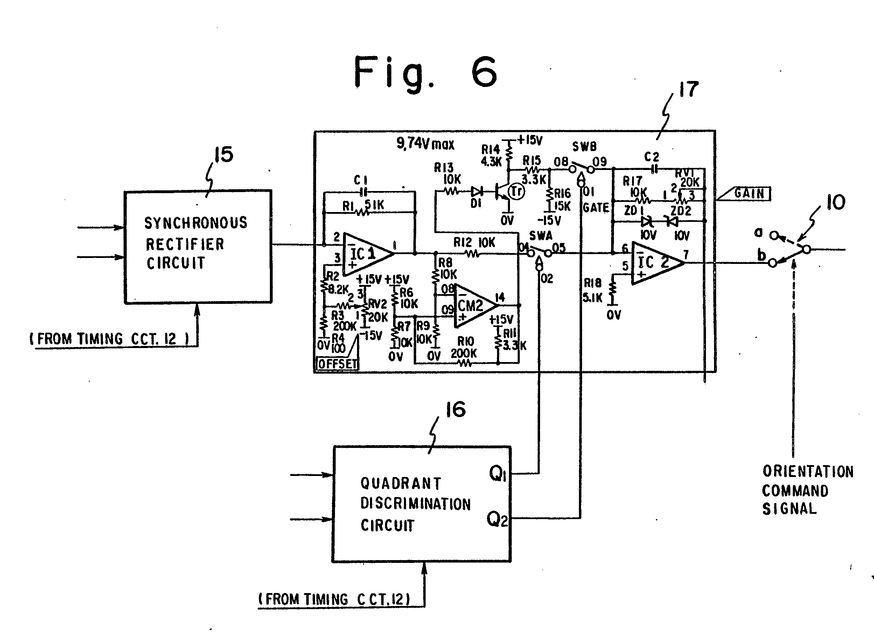

For a fuller understanding of wave synthesizing circuit 17, reference will now be made to Fig. 6 which shows the construction of the circuit 17 in detail. Output quadrant discrimination signals $Q_1$, $Q_2$ from quadrant discrimination circuit 16 described above are applied to the drive section of respective switches SWA, SWB located in wave synthesizing circuit 17, whereby the switches SWA, SWB are opened or closed owing to the rectangular shape of the input signals. On the other hand, the sine wave-shaped rotational position signal applied to wave synthesizing circuit 17 from rectifier circuit 15 passes through an amplifier $IC_1$ and reaches switch SWA in a form as illustrated in waveform (H) of Figure 5. A comparator $CM_2$ receives the output of amplifier $IC_1$ and produces an output signal, having the shape shown in waveform (E) of Figure 5, that is applied to a transistor Tr to gate the transistor ON or OFF. The operation of transistor Tr can be understood from waveform (F) of Figure 5 which shows the collector voltage of transistor Tr. The input side of switch SWB is connected to power source $+\overline{V}_1$ and $-\overline{V}_1$ ($V_1$=15V in the present example) through resistors $R_{14}$, $R_{15}$ and $R_{16}$, so that $+V(V)$ is connected to the input side of switch SWB when transistor Tr is OFF, while there will be a shift to $-V_1(V)$ when transistor Tr is ON. The condition at the input to switch SWB is depicted in waveform (G) of Figure 5.

The shape of the input signal at the minus input terminal of amplifier $IC_2$ is shown in waveform (I) of Figure 5. For a fuller understanding of this waveform assume that the outputs $Q_1$, $Q_2$ of quadrant discrimination circuit 16 attain logic levels of "1" and "0", respectively. The P portion of waveform (I) thus corresponds to the P portion of waveform (H) which appears at the minus input terminal of amplifier $IC_2$ during the period that switch SWA is closed (the interval P in waveform (C)). The outputs $Q_1$, $Q_2$ then go to logic "0" and logic "1", respectively, switch SWB closes, and transistor Tr is turned OFF. During this period (interval Q in waveform (B)) the potential $+V_1(V)$ appears at the input to switch SWB and is therefore applied to amplifier $IC_2$ (the Q portion of waveform (I)). With switch SWB still closed, transistor Tr becomes conductive so that the potential at the input to switch SWB drops sharply from $+V_1$ to $-V_1$, the $-V_1$ potential appearing at the switch input, and hence at the input to amplifier $IC_2$ (the R portion of waveform (I)), during the period for which transistor TR is ON (interval R in waveform (D)). Switch SWB is then opened and, with transistor Tr remaining conductive, switch SWA is closed. Thus, during the interval S in waveform (C), which is the period over which switch SWA is closed while transistor Tr continues to conduct, the S portion of the waveform (H) appears intact at the input to switch SWA, and this is applied to amplifier $IC_2$ (the S portion of waveform (I)). This state continues while the rotor shaft of the resolver rotates through 90 degrees, and transistor Tr is then turned OFF. However, since switch SWA remains closed and switch SWB open, the T portion of waveform (H) at the input to switch SWA is applied to the input of amplifier $IC_2$ (the T portion of waveform (I)) during the interval T in waveform (C). Thus, in the transition from the S portion to the T portion in waveform (I), the potential at the input terminal to amplifier $IC_2$ traverses the zero potential line, and it is this zero voltage signal that is employed as an orientation signal as will be described hereinafter. Next, when switch SWA is opened and switch SWB closed, the $+V_1$ potential again appears at the input to amplifier $IC_2$ so that the input waveform at this time is identical with the portion Q in waveform (I). It thus can be understood that only one single valued zero voltage signal appears between the beginning and end of each revolution of resolver 9. Finally it should be noted that the input to amplifier $IC_2$ is inverted thereby and appears at the output terminal as the signal shown in waveform (J) in Figure 5.

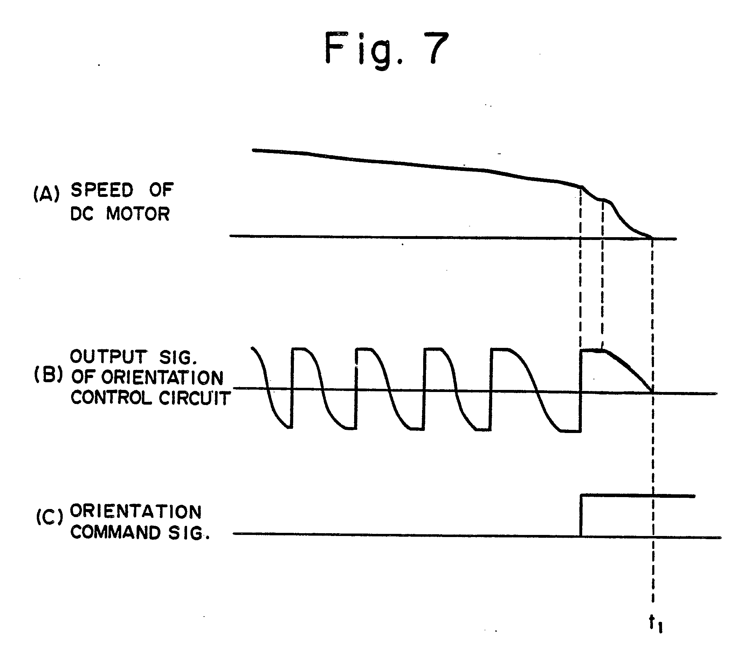

Reference will now be made to the waveforms of Figure 7 to again describe how the spindle shaft 7 is stopped at the prescribed stopping position.

When it is desired to change a machine tool, a stop instruction is applied to DC motor 2 whose speed therefore starts to decrease in a gradual manner, as shown in waveform (A) of Figure 7. At this stage, the orientation control circuit 4 is operative to produce the signal shown in waveform (B) of Figure 7 since the resolver 9 rotates together with the spindle 7. However, as no orientation command has yet been delivered, switch 10 is open so that the position control loop cannot be establised. Then, when an orientation command signal as shown in waveform (C) of Figure 7 is supplied immediately before DC motor 2 stops, switch 10 is switched over to contact b to break the speed control loop and form the position control loop in its place. As a result, DC motor 2 is guided in a direction such as to bring the output signal of orientation control circuit 4 to zero. Thus, the output of orientation control circuit 4 becomes zero when the spindle is so oriented that it has reached the prescribed stopping position at time $t_1$, and the DC motor 2 and spindle come to rest the prescribed position. Thereafter, the position control loop functions to firmly preserve the orientation of the DC motor, that is, the orientation of the spindle shaft 7.

The system so far described with reference to Figures 1 to 7 provides that the spindle shaft can be stopped at only one angular orientation, such as at an angular position of 0 degrees. In an embodiment of the present invention, as will now be described, four spindle stopping positions are provided at an angular pitch of 90 degrees, and the spindle shaft can be stopped selectively at any prescribed one of these positions by means of a command signal.

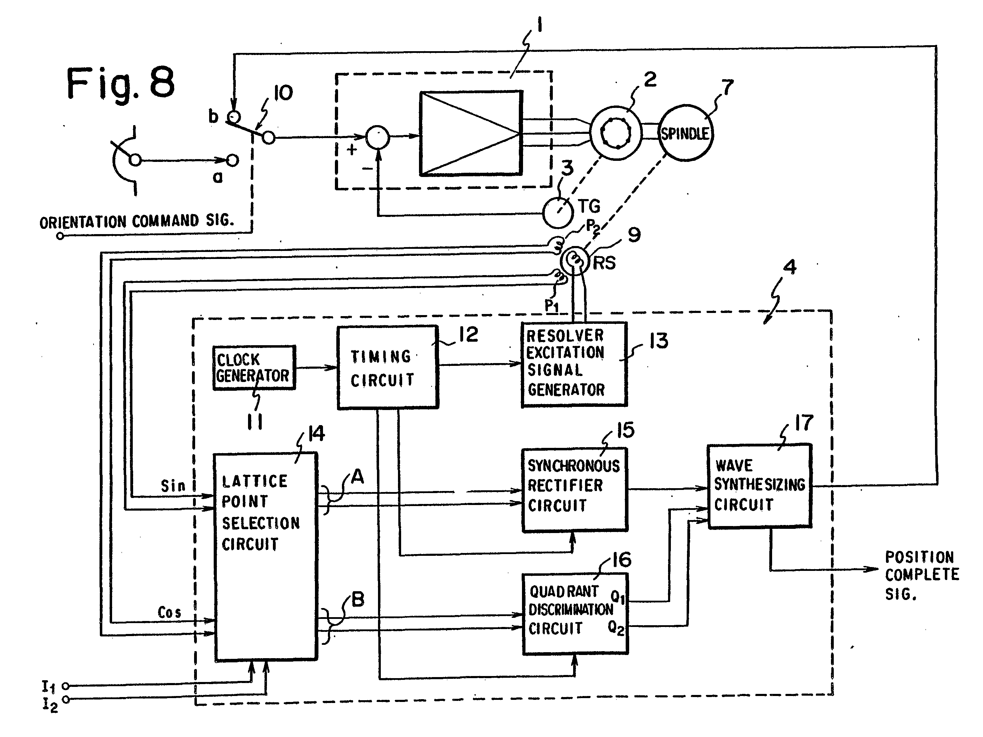

This embodiment of the present invention is illustrated in the block diagram of Fig. 8, wherein a lattice point selection circuit is designated generally at 14. All other parts in Figure 8 are identical with those of the arrangement in Figure 4 and are denoted by the same reference numerals. These portions need not be described again here.

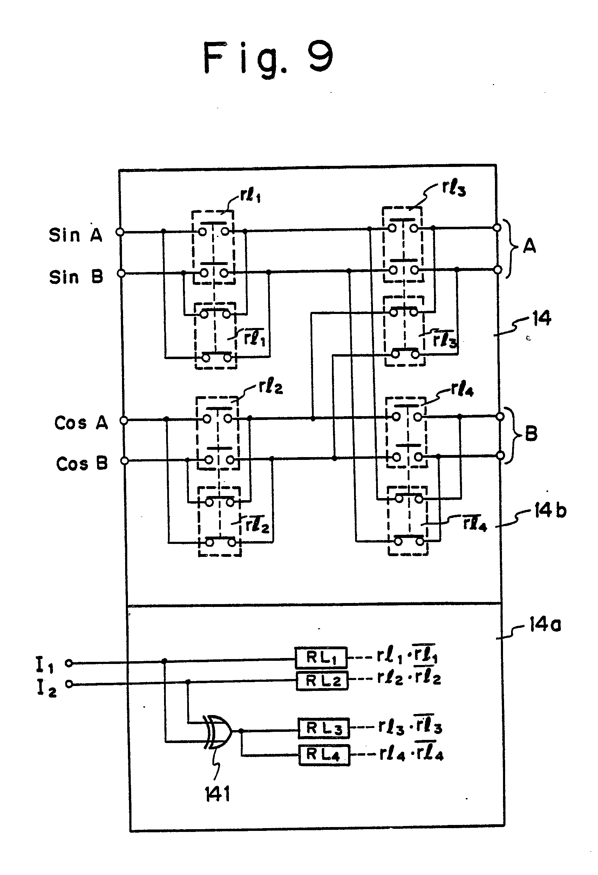

Fig. 9 is a detailed circuit diagram of the lattice selection circuit 14 of the embodiment of the present invention, which circuit comprises a drive section 14a and circuit switching section 14b. The drive section 14a comprises an exclusive OR gate 141 and relay drive circuits $RL_1$, $RL_2$, $RL_3$, $RL_4$. The circuit switching section 14b comprises contacts $rl_1$, $\overline{rl}_1$ actuated by relay drive circuit $RL_1$, contacts $rl_2$, $\overline{rl}_2$ actuated by relay drive circuit $RL_2$, contacts $rl_3$, $\overline{rl}_3$ actuated by relay drive circuit $RL_3$, and contacts $rl_4$, $\overline{rl}_4$ actuated by relay drive circuit $RL_4$. Each relay drive circuit RL is adapted to make the contact rl and break the contact $\overline{rl}$ when an input signal to the drive circuit is at logic "1", and to break the contact rl and make the contact $\overline{rl}$ when the input signal to the drive circuit is at logic "0". The following table shows the relationship between lattice point selecting command signals $I_1$, $I_2$, which indicate the stopping position orientations applied to spindle shaft 7, and the signals applied to the respective relay drive circuits RL.

| Stopping position orientation | Lattice point selecting command signals | | Signals applied to relay drive circuits | | | |
|---|---|---|---|---|---|---|
| | $I_1$ | $I_2$ | $RL_1$ | $RL_2$ | $RL_3$ | $RL_4$ |
| 0 | 1 | 1 | 1 | 1 | 1 | 1 |
| 90 | 1 | 0 | 1 | 0 | 0 | 0 |
| 180 | 0 | 0 | 0 | 0 | 1 | 1 |
| 270 | 0 | 1 | 0 | 1 | 0 | 0 |

Circuit switching portion 14b in lattice point selection circuit 14 performs a switching operation in accordance with the applied lattice point selecting command signals. Thus, when the stopping position orientation is 0 degrees, the output from primary winding $P_1$ of resolver 9 appears intact at output terminals A of circuit 14, and the output from primary winding $P_2$ appears intact at output terminals B of circuit 14. When the stopping position orientation is 90 degrees, the output from primary winding $P_1$ appears at output terminal B, and the output from primary winding $P_2$ appears at output terminal A although inverted in phase. When the stopping position orientation is 180 degrees, the output from primary winding $P_1$ appears at output terminal A and the output from primary winding $P_2$ at output terminal B, the signals at both output terminals being inverted in phase. When the stoppping position orientation is 270 degrees, the output from primary winding $P_1$ appears at output terminal B although inverted in phase, and the output from primary winding $P_2$ appears intact at output terminal A.

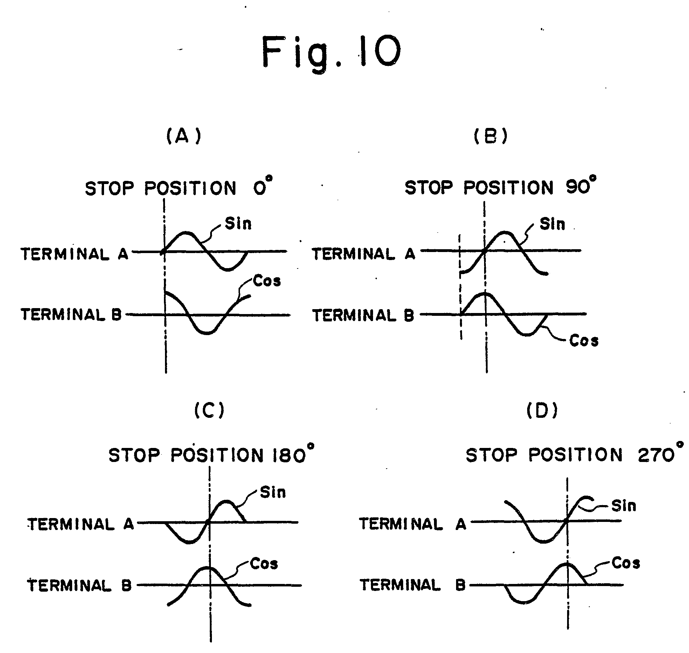

Shown in the diagrams of Fig. 10 are the phase relationships between the envelope curves of the 3 KHz sine and cosine signals, that is, between the rotational position and quadrant discrimination signals which are synchronously rectified signals from among the outputs of primary windings $P_1$, $P_2$ of resolver 9 as obtained from output terminals A, B of lattice point selection circuit 14. The relationships illustrated in Fig. 10 relate to stopping position orientations of 0 degrees (diagram (A)), 90 degrees (diagram (B)), 180 degrees (diagram (C)), and 270 degrees (diagram (D)).

In the embodiment of the present invention the orientation control circuit 4 delivers a stop signal of zero potential when the peak value of a rotational position signal included in the sine signal from output terminal A is zero and the peak value of a quadrant discrimination signal included in the cosine signal from output terminal B attains its maximum positive value.

In the foregoing embodiment, the resolver 9 must be connected directly with spindle 7, because of belt slippage if a belt is used to interconnect the DC motor 2 and spindle 7. However, if gears are used for the DC motor-spindle coupling, the resolver may be connected directly to the rotary shaft of the DC motor.

In accordance with the embodiment of the present invention as described above, a spindle can be stopped reliably not by a mechanical brake but by an electrical braking system. This can afford extremely stable spindle stopping operation at all times and over an extended period since no frictional portions are involved, and can preclude stopping errors that can often result from mechanical slippage. Moreover, since the essential circuitry of the above embodiment of this invention utilizes large parts of the circuitry which constitutes a speed control loop, the provision of the orientation control circuits of those embodiments need not involve the expense of a large quantity of specialised circuitry. This is not only economical but also assures a high positioning accuracy owing to the use of the position control loop. Connecting the resolver directly to the spindle makes possible a positioning accuracy of less than $\pm 0.1$ degrees even if blind sectors of gears are considered. Further, the provision of the lattice point selection circuit allows the spindle to be stopped at any selected one of four stopping positions which can be individually designated by applying control signals of appropriate values to the lattice point selection circuit.

The rotary shaft of a motor for rotating the spindle of a machine tool is stopped rigidly at a prescribed angular position when a tool is to be changed, an embodiment of the present invention accomplishes this, without the use of a mechanical brake, by means of an orientation control circuit adapted to produce an output signal to zero potential when the rotary shaft of the motor is at a prescribed stopping position, and an output signal of a potential proportional to the amount of angular deviation when the rotary shaft of the motor is at a position displaced from the prescribed stopping position. To stop the spindle motor at a prescribed stopping position, the output signal from the orientation control circuit is delivered in place of a speed command signal to a speed control loop of the type which limits to zero the difference between the speed command signal and a speed feedback signal. When the spindle motor is at rest, the feedback function of the speed control loop holds the rotary shaft of the spindle motor rigidly at the stopping position as if a mechanical brake were applied thereto. By means of the lattice point selection circuit, any one of four stopping positions can be prescribed.

## Claims

1. A machine tool drive motor control system, for controlling a spindle drive motor arranged for driving a spindle of a machine tool, including:—

speed detecting means (3) for providing a speed signal indicative of the actual speed of rotation of the spindle (5,6,7);

orientation control means (4,9) for providing a position signal indicative of the difference between actual orientation of the spindle (5,6,7) and a desired orientation, termed a lattice point, at which the spindle (5,6,7) is to be brought to rest;

switching means (10) having respective inputs (a,b) connected to receive a speed command signal, indicative of a desired speed of rotation of the spindle (5,6,7), and the position signal, and selectively operable to deliver one or other of those signals from an output thereof; and

a speed control unit (1) having a first input connected to the output of the switching means (10), a second input connected to receive the speed signal, and an output connected to the spindle drive motor (2) for control thereof;

characterised in that the orientation control means (4,9) include:

a clock generator (11) for generating clock signals;

a timing circuit (12) arranged to receive the clock signals and responsive thereto to provide timing signals;

an excitation signal generator (13) arranged to receive the clock signals via the timing circuit (12) and to provide an excitation signal;

a resolver (9), operationally connected to the spindle (5,6,7), having a secondary winding (S) arranged to receive the excitation signal, and two primary windings ($P_1$,$P_2$) arranged respectively to produce sine and cosine signals (Sin, Cos) indicative of the actual orientation of the spindle;

a synchronous rectifier circuit (15) arranged to receive a signal derived from the resolver (9) and a timing signal generated by the timing circuit (12), for providing a synchronously rectified signal;

a quadrant discriminator circuit (16) arranged to receive another signal derived from the resolver (9) and a signal generated by the timing circuit (12), for providing quadrant discrimination signals for use in identifying the quadrant in which the lattice point lies; and

a wave synthesising circuit (17) arranged to receive the synchronously rectified signal and the quadrant discrimination signals and operable to provide the said position signal;

said orientation control means (4,9) further including;

a lattice point selection circuit (14), arranged to receive the sine and cosine signals from the resolver, having first and second output ports (A,B) connected respectively to the synchronous rectifier circuit (15) and the quadrant discriminator circuit (16), and having switching circuit means ($RL_1$ to $RL_4$) operable to select any one of four pairs of signals for delivery to the synchronous rectifier circuit (15) and the quadrant discriminator circuit (16), the signals of the selected pair being delivered from the first and second output ports (A,B) respectively, and the signals of each pair comprising two signals selected from the group constituted by the sine signal, the cosine signal, a signal inverted in phase with respect to the sine signal, termed the -sine signal, and a signal inverted in phase with respect to the cosine signal, termed the -cosine signal, the four pairs being:— the sine signal and the cosine signal; the -cosine signal and the sine signal; the -sine signal and the -cosine signal; and the cosine signal and the -sine signal;

whereby, in dependence upon the pair of signals selected, any one of four lattice points, mutually spaced by 90°, can be selected as the desired position.

2. A system as claimed in claim 1, wherein the lattice point selection circuit comprises relay drive circuits ($RL_1$ to $RL_4$) operable in dependence upon control signals applied to the lattice point selection circuit to make and break associated relay contacts ($rl_1$, $\overline{rl_1}$ to $rl_4$, $\overline{rl_4}$) to effect selection from the four pairs of signals.

**Patentansprüche**

1. Steuersystem für den Antriebsmotor einer Werkzeugmaschine zur Steuerung eines Spindelantriebsmotors, der zum Antrieb einer Spindel einer Werkzeugmaschine ausgelegt ist, mit einer Geschwindigkeitsermittlungseinrichtung (3) zum Vorsehen eines für die tatsächliche Rotationsgeschwindigkeit der Spindel (5,6,7) bezeichnenden Signals, einer Orientierungs-Steuereinrichtung (4,9) zum Vorsehen eines Positionssignals, das bezeichnend ist für den Unterschied zwischen tatsächlicher Orientierung der Spindel (5,6,7) und einer gewünschten Orientierung, genannt ein Gitterpunkt, bei welchem die Spindel (5,6,7) zum Stillstand gebracht werden soll, eine Schalteinrichtung (10), welche entsprechende Eingänge (a,b) aufweist, die zum Aufnehmen eines für eine gewünschte Rotationsgeschwindigkeit der Spindel (5,6,7) bezeichnenden Geschwindigkeitsbefehlssignals und des Positionssignals angeschlossen sind, und welche wahlweise betätigbar ist, um das eine oder andere dieser Signale von einem Ausgang abzugeben, sowie einer Geschwindigkeitssteuereinheit (1), die einem mit dem Ausgang der Schalteinrichtung (10) verbundenen ersten Eingang, einen zum Aufnehmen des Geschwindigkeitssignals angeschlossenen zweiten Eingang und einen Ausgang aufweist, der mit dem Spindelantriebsmotor (2) zu dessen Steuerung verbunden ist, dadurch gekennzeichnet, daß die Orientierungssteuereinrichtung (4,9) umfaßt:

einen Taktgenerator (11) zur Erzeugung von Taktsignalen,

eine Zeitgeberschaltung (12), die dafür eingerichtet ist, die Taktsignale aufzunehmen und darauf ansprechend Zeittaktsignale zu liefern,

einen Erregungssignalgenerator (13), der dafür eingerichtet ist, die Taktsignale über die Zeitgeberschaltung (12) aufzunehmen und ein Erregungssignal zu liefern,

einen betriebsmäßig mit der Spindel (5,6,7) verbundenen Vektorzerleger (9), der eine Sekundärwicklung (S) aufweist, die zum Aufnehmen des Erregungssignals ausgelegt ist, und zwei Primärwicklungen ($P_1$, $P_2$) aufweist, die zum Erzeugen jeweiliger Sinus- und Cosinussignale (sin, cos) ausgelegt sind, welche für die tatsächliche Orientierung der Spindel bezeichnend sind,

eine Synchrongleichrichterschaltung (15), die ausgelegt ist zur Aufnahme eines von dem Vektorzerleger (9) abgeleiteten Signals und eines von der Zeitgeberschaltung (12) erzeugten Zeittaktsignals zum Liefern eines synchron gleichgerichteten Signals,

eine Quadrantdiskriminatorschaltung (16), die ausgelegt ist zur Aufnahme eines anderen von dem Vektorzerleger (9) abgeleiteten Signals und eines von der Zeitgeberschaltung (12) erzeugten Signals zum Liefern von Quadrantunterscheidungssignalen zur Verwendung bei der Identifizierung des Quadranten, in welchem der Gitterpunkt liegt, sowie eine Wellensynthesizerschaltung (17), die ausgelegt ist zur Aufnahme des synchron gleichgerichteten Signals und der Quadrantunterscheidungssignale und betreibbar ist, um das Positionssignal zu liefern,

wobei die Orientierungssteuereinrichtung (4,9) ferner umfaßt:

eine Gitterpunktwählschaltung (14), die zur Aufnahme der Sinus- und Cosinussignale von dem Vektorzerleger (9) eingerichtet ist und erste und zweite Ausgangsklemmen (Ports) (A,B) aufweist, die mit der Synchrongleichrichterschaltung (15) bzw. mit der Quadrantdiskriminatorschaltung (16) verbunden sind, sowie Schalterkreiseinrichtungen ($RL_1$—$RL_4$) aufweist, die betriebbar sind, um eines von vier Paaren von Signalen zur Lieferung an die Synchrongleichrichterschaltung (15) und die Quadrantdiskriminatorschaltung (16) auszuwählen, wobei die Signale des ausgewählten Paares von den ersten bzw. den zweiten Ausgangsklemmen (A,B) geliefert werden und die Signale jedes Paares zwei Signale umfassen, welche aus der Gruppe ausgewählt sind, die gebildet wird durch das Sinussignal, das Cosinussignal, ein gegenüber dem Sinussignal in der Phase invertiertes Signal, genannt das -Sinussignal und ein gegenüber dem Cosinussignal in der Phase invertiertes Signal, genannt das -Cosinussignal, wobei die vier Paare sind: das Sinussignal und das Cosinussignal, das -Cosinussignal und Sinussignal, das -Sinussignal und das -Cosinussignal sowie das Cosinussignal und das -Sinussignal, wodurch in Abhängigkeit von dem gewählten Paar von Signalen jeder beliebige von vier Gitterpunkten, die voneinander um 90° beabstandet sind, als die gewünschte Position ausgewählt werden kann.

2. Steuersystem nach Anspruch 1, dadurch gekennzeichnet, daß die Gitterpunktwählschaltung Relaisantriebsschaltungen ($RL_1$—$RL_4$) unfasst, die in Abhängigkeit von Steuersignalen betreibbar sind, welche an die Gitterpunktwählschaltung angelegt werden, um zugeordnete Relaiskontakte ($rl_1$,$\overline{rl_1}$—$rl_4$,$\overline{rl_4}$) zu schließen und zu unterbrechen, und um damit die Auswahl aus den vier Paaren von Signalen zu bewirken.

**Revendications**

1. Système de commande du moteur d'entraînement d'une machine-outil, destiné à commander le moteur d'entraînement d'une broche, agencé pour entraîner la broche d'une machine-outil, comprenant:

— des moyens de détection de la vitesse (3) destinés à procurer un signal de vitesse representatif de la vitesse de rotation réelle de la broche (5,6,7);

— des moyens de contrôle de l'orientation (4,9) destinés à procurer un signal de position représentatif de la différence entre l'orientation réelle de la broche (5,6,7) et une orientation souhaitée, appelée point de trame auquel la broche (5,6,7) doit être amenée à s'arrêter;

— des moyens de commutation (10) comportant des entrées respectives (a,b) connectées pour recevoir un signal de commande de la vitesse, représentatif d'une vitesse de rotation souhaitée de la broche (5,6,7), et le signal de position, et actionnable de façon sélective pour délivrer l'un ou l'autre de ces signaux à partir d'une sortie de ceux-ci; et

— une unité de contrôle de la vitesse (1) comportant une première entrée reliée à la sortie des moyens de commutation (10), une seconde entrée connectée pour recevoir le signal de vitesse, et une sortie reliée au moteur d'entraînement de la broche (2) pour commander celui-ci;

— caractérisé par le fait que les moyens de contrôle de l'orientation (4,9) comprennent:

— un générateur d'horloge (11) destiné à engendrer des signaux d'horloge;

— un circuit de temporisation (12) agencé pour recevoir les signaux d'horloge et y répondre pour procurer des signaux de temporisation;

— un générateur de signal d'excitation (13) agencé pour recevoir les signaux d'horloge via le circuit de temporisation (12) et pour procurer un signal d'excitation;

— un organe de résolution (9), relié de façon opérationnelle à la broche (5,6,7), comportant un enroulement secondaire (S) agencé pour recevoir le signal d'excitation, et deux enroulements primaires (P₁,P₂) agencés respectivement pour produire des signaux sinus et consinus (Sin, Cos) représentatifs de l'orientation réelle de la broche;

— un circuit redresseur synchrone (15) agencé pour recevoir un signal obtenu à partir de l'organe de résolution (9) et un signal de temporisation engendré par le circuit de temporisation (12), pour procurer un signal redressé de façon synchrone;

— un circuit de discrimination du quadrant (16) agencé pour recevoir un autre signal obtenu à partir de l'organe de résolution (9) et un signal engendré par le circuit de temporisation (12), pour procurer des signaux de discrimination du quadrant destinés à être utilisés pour l'identification du quadrant dans lequel est situé le point de la trame; et

— un circuit synthetiseur d'ondes (17) agencé pour recevoir le signal redressé de façon synchrone et les signaux de discrimination du quadrant, et actionnable pour procurer ledit signal de position;

— lesdits moyens de contrôle de l'orientation (4,9) comprenant en outre:

— un circuit de sélection du point de la trame (14), agencé pour recevoir les signaux sinusoidal et cosinusoidal provenant de l'organe de résolution, comportant des premier et second points de sortie (A,B) reliés respectivement au circuit redresseur synchrone (15) et au circuit de discrimination du quadrant (16), et comportant des moyens à circuit de commutation (RL₁ à RL₄) actionnables pour sélectionner l'une quelconque de quatre paires de signaux destinés à être délivrés au circuit redresseur synchrone (15) et au circuit de discrimination du quadrant (16), les signaux de la paire sélectionnée étant délivrés respectivement à partir des premier et second points de sortie (A,B), et les signaux de chaque paire comprenant deux signaux choisis dans le groupe constitué du signal sinus, du signal cosinus, d'un signal dont la phase est inversée par rapport au signal sinus, appelé signal—sinus, et d'un signal dont la phase est inversée par rapport au signal consinus, appelé signal—cosinus, les quatre paires étant:

— le signal sinus et le signal cosinus; le signal -cosinus et le signal sinus; le signal -sinus et le signal -cosinus; et le signal cosinus et le signal -sinus;

— ce qui permet de choisir, en fonction de la paire de signaux choisie, l'un quelconque de quatre points de la trame espacés mutuellement de 90°, comme position souhaitée.

2. Système selon la revendication 1, dans lequel le circuit de sélection du point de la trame comprend des circuits de commande de relais (RL₁ à RL₄) actionnables en fonction des signaux de contrôle appliqués au circuit de sélection du point de la trame pour établir et interrompre des contacts de relais associés (rl₁, r̄l₁ à rl₄, r̄l₄) pour effectuer la sélection à partir des quatre paires de signaux.

# Fig. 1

# Fig. 2

# Fig. 3

Fig. 4

# Fig. 5

(A) SINE SIGNAL

3KHz

360°

(B) COSINE SIGNAL

(C) Q₁ SIG.

(P)  (S) (T)

(D) Q₂ SIG.

(Q) (R)

(E) OUTPUT SIG. OF COMPARATOR CM₂

(F) COLLECTOR VOLTAGE OF TRANSISTOR Tr

$+\overline{V}_l$

(G) INPUT SIG. TO SWITCH SWB

$+\overline{V}_l$

$-\overline{V}_l$

(H) INPUT SIG. TO SWITCH SWA

(P)  (T)  (S)

(I) INPUT SIG. TO AMPLIFIER IC₂

(P) Q  I TURN  (T)  (R)  (S)

(J) OUTPUT SIG OF AMPLIFIER IC₂

3

# Fig. 6

SYNCHRONOUS RECTIFIER CIRCUIT

15

(FROM TIMING CCT. 12 )

QUADRANT DISCRIMINATION CIRCUIT

16

(FROM TIMING CCT.12)

9.74V max

17

ORIENTATION COMMAND SIGNAL

10

0012619

4

# Fig. 7

(A) SPEED OF DC MOTOR

(B) OUTPUT SIG. OF ORIENTATION CONTROL CIRCUIT

(C) ORIENTATION COMMAND SIG.

$t_1$

# Fig. 8

ORIENTATION COMMAND SIG.

0012619

# Fig. 9

# Fig. 10

(A)

STOP POSITION 0°

(B)

STOP POSITION 90°

(C)

STOP POSITION 180°

(D)

STOP POSITION 270°